# EUROPÄISCHE PATENTANMELDUNG

(11) **EP 1 413 812 A2**
(43) Veröffentlichungstag der Anmeldung: **28.04.2004**
(21) Anmeldenummer: 03014217.8
(22) Anmeldetag: 25.06.2003
(51) Int. Cl.: F16K 41/12

(54) **Membranventil mit fächerartiger Membranunterstützung**

(30) Priorität: 23.10.2002 DE 10249348
(71) Anmelder: APV ROSISTA GMBH, 59425 Unna (DE)
(72) Erfinder: Schulz, Dieter, 44894 Bochum (DE)

(57) **Zusammenfassung**

Die Erfindung bezieht sich auf ein Membranventil und dergleichen wie Einsitzventil, Druckhalteventil mit einer Membrane, die in einem Ventilgehäuse dichtend eingelagert ist und den Steuerraum oder die bewegliche Ventilschaftstange von dem Produktraum trennt, mit einer Stützeinrichtung zur Stabilisierung der eingesetzten Membrane. Die Erfindung zeichnet sich dadurch aus, dass die Stützeinrichtung aus fächerartig ausgebildeten Stützelementen (20, 21) gebildet ist, die der Membrane (2, 3, 16) auf ihrer schaftseitigen Fläche in allen Bewegungsebenen und Stellpositionen folgen und diese abstützen. Dabei ist auch vorgesehen, dass die Stützeinrichtung fächerartig ineinander bewegbare Stützelemente aufweist und ein erstes Stützelement als Fächerscheibe (20) im Deckel (22) und ein zweites fächerartiges Stützelement als Fächerschaft (21) auf der beweglichen Schaftstange (13) angeordnet ist.

## Beschreibung

Die Erfindung bezieht sich auf ein Membranventeil und dergleichen, wie Einsitzventil, Druckhalteventil mit einer ein- oder mehrteiligen Membrane gemäß Oberbegriff des Anspruchs 1.

Derartige Membranventile zählen zu den pneumatisch gesteuerten Druckregelventilen bzw. Druckhalteventilen zur Konstanthaltung von Prozessdrücken in verfahrenstechnischen Anlagen, beispielsweise der Lebensmittel- und/oder Getränkeindustrie sowie der pharmazeutischen und chemischen Industrie. Das Wirkungsprinzip der Druckkonstanthaltung beruht auf dem Verkleinern oder Vergrößern des freien Strömungsquerschnittes am Ventilsitz durch den verstellbaren Ventilschaft, der mit der Regelmembrane verbunden ist. Ferner wurden derartige Membranventile zur allgemeinen Ansteuerung von Produktströmen eingesetzt. Als Abdichtung zwischen dem in der Rohrleitung eingebundenem Ventilgehäuse und der beweglichen Schaftstange werden dünne Tellermembranen aus PTFE eingesetzt. Diese Tellermembranen haben eine äußere und innere Einspannung oder nur eine äußere Einspannung und sind innen einstückig mit dem Schaft verbunden. Die Tellermembranen müssen einerseits dünn sein, um flexibel die Bewegung der Schaftstange folgen zu können und andererseits müssen sie den Produkt-Druckkräften standhalten. Der Produktdruck führt zu einer Dehnung der Membrane im drucktragenden Bereich und führt schließlich zu einem Membranbruch. Ferner werden Zugkräfte auf die innere und äußere Membraneinspannung verursacht, die die Dichtheit negativ beeinflussen. In realen Installationen treten insbesondere während der Inbetriebnahme auch häufig Druckspitzen durch Mängel in der Prozessführung auf. Bei höheren Temperaturen, z. B. bei der Dampfsterilisation hat das Membranmaterial eine geringere Festigkeit. Zur Entlastung der Tellermembrane sind Membranunterstützungen auf der dem Druck abgewandten Seiten bekannt, wie Gummi mit Gewebeeinlage anvulkanisiert oder innen und außen gefaßte bewegliche Metallsegmente.

Bei diesen Steuerventilen bestehen die Probleme im wesentlichen im Bereich der Regel bzw. Abdichtmembrane, die aufgrund der Bauart in den meisten Fällen unmittelbar mit dem Prozess in Kontakt steht. Insbesondere sind besondere konstruktive Vorkehrungen erforderlich, die ein Ausströmen des Prozess- und/oder Steuerfluids im gefährdeten Bereich der Membrane verhindern.

Bei bekannten Steuerventilen stellt die Ausgestaltung der Membranwand ein Problem dar. Aus verschiedenen Gründen muß diese Membranwand oft einen wesentlich größeren Durchmesser besitzen als der Teil des verschieblichen Ventilkörpers, der an der Membranwand befestigt ist. Dies macht es schwierig, eine hohe Regelgenauigkeit zu erzielen. Genauer gesagt, besteht ein Problem darin, dass die Membranwand gleichzeitig zwei verschiedene Eigenschaften, nämlich einerseits eine mechanische Festigkeit und andererseits eine Flexibilität im Hinblick auf kleine Druckschwankungen zwischen den auf den gegenüberliegenden Seiten der Membranwand vorherrschenden Drücke, aufweisen muß.

Ein weiteres Problem tritt auf, wenn die Membranwand mit einem Prozessfluid in Kontakt stehen soll. Es bestehen dann nämlich Anforderungen im Hinblick auf einen hygienischen Aufbau der Membranwand und des gesamten Steuerventils, was bedeutet, dass die dem Prozessfluid zugewandte Seite des Steuerventils keine Räume aufweisen darf, die für ein Reinigungsfluid schwer zugänglich sind. Außerdem darf praktisch keine Gefahr in Bezug auf ein Ausströmen bzw. Ausfließen des Prozess- oder Steuerfluids durch die Bereiche der Membranwand bestehen, in denen diese an dem Ventilgehäuse und an dem Ventilkörper befestigt ist. Dies gilt insbesondere bei dem Einsatz der Steuerventile in der Lebensmittelindustrie.

Aus der US-PS 3182678 geht ein Steuerventil der eingangs genannten Art hervor, bei dem die aus zwei Membranteilen bestehende Membranwand eine zwischen den Membranteilen angeordnete Stützeinrichtung aufweist. Diese Stützeinrichtung weist die Form einer Scheibe auf, die sich, ausgehend vom zentralen Teil der Membranteile, eine vorgegebene Strecke in radialer Richtung nach außen erstreckt. Bei der Vorsehung einer derartigen Stützeinrichtung ist die Beanspruchung der Membranteile bei der Bewegung des Ventilkörpers so groß, dass das gesamte Ventil eine vergleichsweise geringe Lebensdauer aufweist.

Aus der DE-PS 458931 geht ein Steuerventil hervor, bei dem die Membranwand aus einem einzigen Membranteil besteht, an dessen einer Seite eine Stützeinrichtung in der Form einer mit radial verlaufenden Schlitzen versehenen Scheibe angeordnet ist, die praktisch die gesamte freiliegende Fläche der einen Seite des Membranteils überdeckt. Beim Betrieb dieses Steuerventiles wird das scheibenförmige Stützelement durch die Relativbewegungen zwischen dem Ventilkörper und dem Ventilgehäuse konisch verformt.

Dies führt dazu, dass die äußeren Enden des Membranteils, die über den äußeren Umfang des scheibenförmigen Stützelementes hinausragen und in dem Ventilgehäuse eingeklemmt sind, in axialer Richtung relativ stark belastet werden. Bei der Verwendung eines diesbezüglichen dünnen Membranteiles ist die Lebensdauer relativ gering.

Schließlich ist aus der DE-PS 28 18 633 ein Steuerventil mit einer Membranwand bekannt geworden, die dichtend in einem Ventilgehäuse eingeklemmt ist, in dem sie zwei Kammern voneinander trennt, die mit unterschiedlichen Drücken beaufschlagbar sind, und mit einem Ventilkörper, der an einem zentralen Bereich der Membranwand befestigt und unter Einwirkung auf einen Ventilsitz in axialer Richtung durch die Membranwand bewegbar ist, wobei die Membranwand zwei separate Membranteile aufweist, von denen jeweils eines auf einer Seite der Membranwand angeordnet ist und einer entsprechenden Kammer zugewandt ist, und wobei zwischen den Membranteilen eine Stützeinrichtung vorgesehen ist, wobei die Stützeinrichtung aus einer Anzahl von voneinander getrennten steifen Stützelementen besteht, deren eine Enden jeweils verschwenkbar mit dem Ventilgehäuse und deren andere Enden jeweils verschwenkbar mit dem Ventilkörper verbunden sind.

Die Aufgabe der vorliegenden Erfindung besteht daher darin, ein Steuerventil oder Einsitzventil der eingangs genannten Art dahingehend zu verbessern, dass es auch bei der Verwendung von dünnen Membranteilen eine hohe Lebensdauer aufweist, ohne dass die Gefahr des Bruches der Membranteile besteht, und bei dem der verschiebliche Ventilkörper leicht bewegbar ist, um schnell und genau auf die in den beiden Kammern des Ventilgehäuses vorherrschenden Drücke anzusprechen.

Diese Aufgabe wird durch ein Steuerventil der eingangs genannten Art gelöst, das durch die in dem kennzeichnenden Teil des Patentanspruches 1 und 2 angegebenen Merkmale ausgebildet ist.

Demnach besteht der Vorteil der erfindungsgemäßen Ausführung in der nahezu vollflächigen Unterstützung der Membrane während des gesamten Schaltbewegungsablaufes solcher Ventile bzw. deren Hubbewegung. Auf diese Weise werden die auftretenden Zugkräfte auf die äußere und innere Einspannung erheblich reduziert oder sogar vollständig eliminiert.

In der Zeichnung zeigt:
- Figur 1: einen Querschnitt durch das als Druckhalteventil ausgebildete Membranventil,
- Figur 2: einen Querschnitt durch ein Einsitzventil,
- Figur 3: die erfindungsgemäße Weiterbildung solcher Ventile nach Figur 1 und 2,
- Figur 4: eine Draufsicht zu Figur 3 in Teilansicht und
- Figur 5: eine Variante der Membranabstützung in vereinfachter Form.

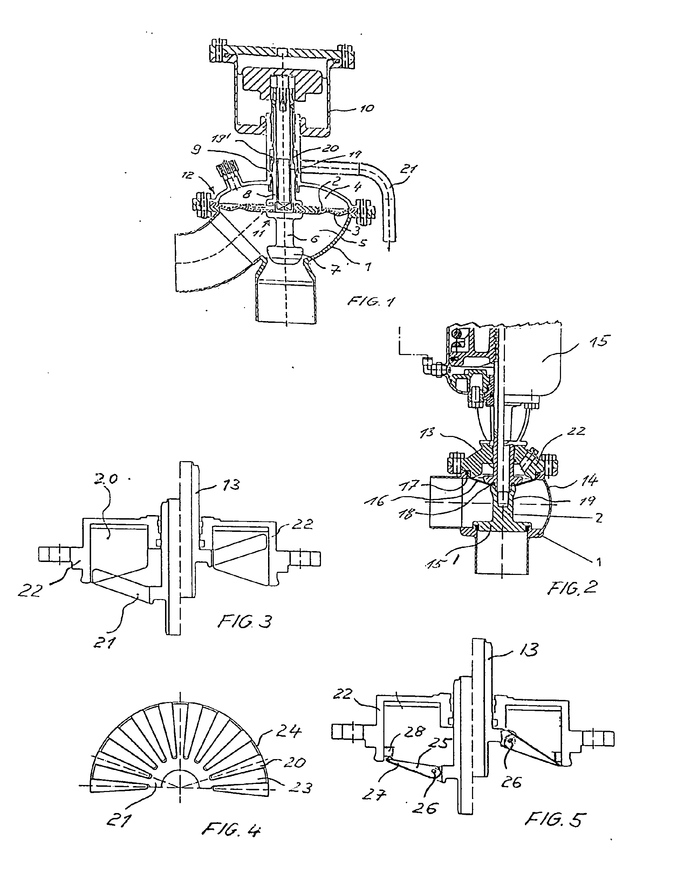

Gemäß dem in Figur 1 dargestellten Ausführungsbeispiel besteht das als Druckhalteventil ausgebildete Membranventil aus einem Ventilgehäuse 1, dessen Innenraum eine abdichtend eingespannte Doppelmembrane mit einer oberen Membrane 2 und einer unteren Membrane 3 aufweist. Diese Membranen 2, 3 teilen das Ventilgehäuse 1 in einen oberen Steuerraum 4 und einen unteren Produktraum 5. In dem Produktraum 5 befindet sich ein unterer Ventilschaft 6 mit einem Steuerventil 7. Der obere Steuerraum 4 nimmt den oberen Ventilschaft 8 auf, der durch das Ventilgehäuse 1 durch eine Führung 9 zu einem zusätzlich verwendeten Booster 10 führt. Die Ventilschäfte 6, 8 weisen eine zentrale Einspannstelle 11 für den Membranen 2, 3 auf, die ihrerseits auf einer Spannplatte 11 aufgelegt sind. Der äußere Rand dieser Membranen 2, 3 ist in einer äußeren Einspannstelle 12 dichtend gehalten.

Ein weiteres Ventil, bei dem die noch zu beschreibende erfindungsgemäße Ausbildung vorteilhaft einsetzbar ist, zeigt Figur 2. Dieses Ventil ist als Einsitzventil mit beweglicher Schaftstange 13 ausgebildet, die von einem außerhalb des Ventilgehäuses 14 angeordnetem Stellmotor 15 ansteuerbar ist und das Ventil 15' entsprechend schaltet. Als Abdichtung zwischen dem in einer Rohrleitung angeordneten Ventilgehäuse 14 und der beweglichen Schaftstange 13 ist eine dünne Tellermembrane 16 vorgesehen. Solche Tellermembranen weisen eine äußere und innere Einspannstelle 17, 18 auf. Es sind auch Ausführungen solcher Membranen bekannt, die nur eine äußere Einspannstelle 17 aufweisen und innen einstückig mit dem Ventilschaft 19 verbunden sind.

Bei diesen vorbeschriebenen und ähnlichen Ventilen kann die nachfolgend beschriebene erfindungsgemäße Ausbildung vorteilhaft eingesetzt werden. Eine solche Ausbildung sieht gemäß dem in Figur 3 dargestellten Ausführungsbeispiel eine Stützeinrichtung zur Stabilisierung der vorgesehenen Membrane 2, 3 bzw. 16 vor, die aus fächerartig ineinanderbewegbaren Stützelementen 20, 21 besteht. Dabei ist ein erstes Stützelement als Fächerscheibe 20 im Deckel 22 des Ventilgehäuses abgestützt und das zweite Stützelement als Fächerschaft 21 auf der beweglichen Schaftstange 13 angeordnet.

Es ist aber auch denkbar, die Schaftstange 13 direkt mit dem Fächerschaft als einteiliges Bauelement auszuführen, wobei für beide Stützelemente 20 und 21 vorzugsweise Kunststoff oder Feinguss als Material vorgesehen ist.
Die Fächerscheibe 20 kann ortsfest oder auch geringfügig federnd im Ventilgehäuse 14 bzw. Deckel 22 angeordnet sein, wobei der Fächerschaft 21 mit seinen vorzugsweise sternförmig angeordneten Stegen 23 in die Fächerspalten 24 der Fächerscheibe 20 während der Schaltvorgänge hinein- und aus diesen hinausbewegbar ist. Während der Schaltbewegungen der Schaftstange 13 durchdringen sich mindestens teilweise die Fächerspalte und Stege der Fächerscheibe 20 und des Fächerschaftes 21. Auf diese Weise wird eine optimale Unterstützungsebene für die Membrane 2, 16 in allen Schalt- und Bewegungspositionen und -Ebenen, also während der gesamten Schafthübe, gebildet.

Eine Variante zu der vorbeschriebenen Membranunterstützung zeigt Figur 5. Die fächerartig bzw. sternförmig ausgebildeten bzw. entsprechend angeordneten Stützelemente bestehen aus einer Vielzahl von Einzelstützelementen 25. Diese können einseitig an der Schaftstange gelenkig und/oder federnd gelagert sein und der Schaltbewegung der Schaftstange folgen. Dabei sind die Einzelstützelemente auf dem der Lagerstelle 26 gegenüberliegenden Ende 27 auf einem Vorsprung 28 des Gehäuses 22 abgestützt. Diese Ausbildung kann auch umgekehrt aufgebaut sein, wobei also die Lagerstelle 26 der Einzelstützelemente 25 am Gehäuseteil 22 und die Abstützung auf einen Vorsprung der Schaftstange 13 erfolgt. Allerdings ist auch eine einseitig federnde Anbindung der Stützelemente denkbar.

## Patentansprüche

1. Membranventil und dergleichen wie Einsitzventil, Druckhalteventil mit einer Membrane, die in einem Ventilgehäuse dichtend eingelagert ist und den Steuerraum oder die bewegliche Ventilschaftstange von dem Produktraum trennt, mit einer Stützeinrichtung zur Stabilisierung der eingesetzten Membrane, ***dadurch gekennzeichnet, dass*** die Stützeinrichtung aus fächerartig ausgebildeten Stützelementen (20, 21) gebildet ist, die der Membrane (2, 3, 16) auf ihrer schaftseitigen Fläche in allen Bewegungsebenen und Stellpositionen folgen und diese abstützen.

2. Membranventil gemäß dem Oberbegriff des Anspruchs 1, ***dadurch gekennzeichnet, dass*** die Stützeinrichtung fächerartig ineinander bewegbare Stützelemente aufweist und ein erstes Stützelement als Fächerscheibe (20) im Deckel (22) und ein zweites fächerartiges Stützelement als Fächerschaft (21) auf der beweglichen Schaftstange (13) angeordnet ist.

3. Membranventil gemäß Anspruch 2, ***dadurch gekennzeichnet, dass*** die Fächerscheibe (20) ortsfest im Deckel (22) angeordnet und der Fächerschaft (21) mit seinen Stegen (23) in die Fächerspalten (24) der Fächerscheibe (20) hinein und aus dieser hinaus bewegbar ist.

4. Membranventil nach den Ansprüche 1 und 2, ***dadurch gekennzeichnet, dass*** die Fächerstege (23) und Fächerspalte (24) der Fächerscheibe (20) und des Fächerschaftes (21) während der Schaltbewegung der Schaftstange (13) mindestens teilweise einander durchdringen.

5. Membranventil nach den vorhergehenden Ansprüchen, ***dadurch gekennzeichnet, dass*** die miteinander korrespondierenden Teile (20, 21) der Stützeinrichtung aus Kunststoff und/oder Feinguss gebildet sind.

6. Membranventil nach Anspruch 1, ***dadurch gekennzeichnet, dass*** die fächerartig ausgebildeten Stützelemente als eine Vielzahl von Einzelstützelementen (25) sternförmig mindestens einseitig an der Schaftstange (13) gelenkig und/oder federnd gelagert sind und mit dieser der Schaltbewegung folgen.

7. Membranventil nach Anspruch 1 und 6, ***dadurch gekennzeichnet, dass*** die Einzelstützelemente (25) auf dem der Lagestelle (26) gegenüberliegenden Ende (27) auf einem Vorsprung (28) des Gehäuses (22) aufliegen.

8. Membranventil nach den Ansprüchen 1, 6 und 7, ***dadurch gekennzeichnet, dass*** die Lagerung der Einzelstützelemente (25) am Gehäuse (22) erfolgt und die freien Enden (27) der Einzelstützelemente (25) an einem Vorsprung (28) der Schaftstange (13) aufliegen.
